# EUROPEAN PATENT APPLICATION

(11) **EP 4 609 932 A1**
(43) Date of publication of application: **03.09.2025**
(21) Application number: 25160409.6
(22) Date of filing: 26.02.2025
(51) Int. Cl.: B01D 21/00, B01D 21/01, B01D 21/30, B01D 37/02, B01D 37/03, C01F 11/46, C22B 3/22, C22B 3/44, C22B 26/12, B01J 20/08, B01J 20/10, B01J 20/28, B01D 24/20, B09B 101/16, C02F 1/52, H01M 10/54, B01J 20/14

(54) **METHOD OF REFINING METAL AND METHOD OF FABRICATING POSITIVE ELECTRODE ACTIVE MATERIAL USING THE SAME**

(30) Priority: 27.02.2024 KR 20240028005
(71) Applicant: SAMSUNG SDI CO., LTD., Yongin-si, Gyeonggi-do 17084 (KR)
(72) Inventor: PARK, Seongin, 17084 Yongin-si (KR); LEE, Youngjun, 17084 Yongin-si (KR); YOO, Kwangyong, 17084 Yongin-si (KR); SOHN, Myungbeom, 17084 Yongin-si (KR); SON, Jongsung, 17084 Yongin-si (KR); YOU, Yongchan, 17084 Yongin-si (KR)
(74) Representative: Marks & Clerk LLP

(57) **Abstract**

Methods of refining metals and methods of manufacturing positive electrode active materials are disclosed. The methods of refining metals comprise preparing an acid solution that includes an impurity and metal, adding a filtration aid to the acid solution to make a precipitation reaction solution, and filtering the precipitation reaction solution to separate a liquid including the metal and a solid including the impurity and the filtration aid. The filtration aid includes one or more of silicon dioxide (SiO₂), aluminium oxide (Al₂O₃), calcium hydroxide (Ca(OH)₂).

## Description

### BACKGROUND

The present disclosure relates to a method of refining metal and a method of fabricating a positive electrode active material using the same.

Rechargeable lithium batteries are widely used as power sources for communication and information devices such as cell phones, laptop computers, and digital cameras due to their high operating voltage, excellent charge/discharge cycles, and adaptability to compactness. Demands for rechargeable lithium batteries are rapidly increasing in line with the potential for commercialization of electric vehicles.

Owing to its excellent reversibility, low self-discharge rate, high capacity, high energy density, and easy synthesis, LiCoO₂ had been commercially used as a positive electrode active material of rechargeable lithium batteries. The high cost of cobalt (Co) has recently led to the utilization of a lithium metal salt (ternary metal Li double oxide) containing almost equal proportions of cobalt (Co), nickel (Ni), and manganese (Mn) as a positive electrode active material, and an aluminium plate coated with a mixture of the lithium metal salt, a binder, and a solvent is used as a positive electrode.

However, since cobalt (Co), nickel (Ni), manganese (Mn), and lithium (Li) are still relatively expensive valuable metals, it is expected that their recycling will bring considerable economic benefits. Thus, research has been actively conducted to recover these valuable metals.

### SUMMARY

An embodiment of the present disclosure provides a method of refining metal, wherein said method exhibits improved filterability.

An embodiment of the present disclosure provides a method of fabricating a positive electrode active material for a rechargeable lithium battery, wherein said positive electrode active material includes a lithium precursor recovered by the method of refining metal.

According to an embodiment of the present disclosure, a method of refining metal comprises: preparing an acid solution that includes a metal and an impurity; adding a filtration aid to the acid solution to make a precipitation reaction solution; and filtering the precipitation reaction solution to separate a liquid including the metal and a solid including the impurity and the filtration aid. The filtration aid includes one or more of silicon dioxide (SiO₂), aluminium oxide (Al₂O₃), calcium hydroxide (Ca(OH)₂).

According to an embodiment of the present disclosure, a method of refining metal comprises: preparing a filter using an aqueous solution including a filtration aid such that the filter is coated with the filtration aid; preparing an acid solution that includes a metal and an impurity; adding a neutralizer to the acid solution to make a precipitation reaction solution; and filtering the precipitation reaction solution with the filter to separate a liquid including the metal and a solid including the impurity. The filtration aid includes one or more of silicon dioxide (SiO₂), aluminium oxide (Al₂O₃).

According to an embodiment of the present disclosure, a method of manufacturing a positive electrode active material may comprise: manufacturing a mixture of lithium and transition metal by mixing a transition metal precursor with a lithium precursor that is refined by the method discussed above; and calcinating the mixture of lithium and transition metal.

At least some of the above and other features of the invention are set out in the claims.

### BRIEF DESCRIPTION OF DRAWINGS

FIG. 1 illustrates a flow chart showing a method of refining metal according to an embodiment of the present disclosure.
FIG. 2 illustrates a flow chart showing a method of refining metal according to an embodiment of the present disclosure.
FIGS. 3A to 3C illustrate SEM analysis results of precipitates produced by a neutralization process in Comparative Example 1.
FIGS. 4A to 4C illustrate appearances of solid separated through filtration processes in Embodiments and Comparative Example.
FIG. 5 illustrates a schematic diagram showing a cylindrical filtration device used in Embodiments and Comparative Example.
FIG. 6 illustrates a graph showing measured results of filtration rates in methods of refining metal according to Embodiments and Comparative Example.
FIGS. 7A and 7B illustrate appearances of liquid separated through filtration processes according to Embodiments and Comparative Example.

### DETAILED DESCRIPTION OF EMBODIMENTS

In order to understand the configuration and effect of the present disclosure, some embodiments of the present disclosure will be described with reference to the accompanying drawings. It should be noted, however, that the present disclosure is not limited to the following embodiments, and may be implemented in various forms. Rather, the embodiments are provided only to allow those skilled in the art to fully understand the scope of the present disclosure.

In this description, it will be understood that when an element is referred to as being on another element, the element can be directly on the other element or intervening elements may be present therebetween. In the drawings, thicknesses of some components are exaggerated for effectively explaining the technical contents. Like reference numerals refer to like elements throughout the specification.

Some embodiments detailed in this description will be discussed with reference to sectional and/or plan views as example views of the present disclosure. In the drawings, thicknesses of layers and regions are exaggerated for effectively explaining the technical contents. Accordingly, regions illustrated in the drawings have general properties, and shapes of regions illustrated in the drawings are used to disclose specific shapes but not limited to the scope of the present disclosure. It will be understood that, although the terms "first", "second", "third", etc. may be used herein to describe various elements, these elements should not be limited by these terms. These terms are only used to distinguish one element from another element. Some embodiments explained and illustrated herein include complementary embodiments thereof.

The terminology used herein is for the purpose of describing particular embodiments only and is not intended to limit the full scope of the present disclosure. As used herein, the singular forms are intended to include the plural forms as well. The terms 'comprises/includes' and/or 'comprising/including' used in the specification do not exclude the presence or addition of one or more other components.
In this invention, an average particle diameter (D₅₀) refers to the average diameter of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. D₅₀ may be measured by a particle size analyzer using a laser diffraction method for the particles.

The present disclosure relates to a method of refining metal that improves filterability and a method of fabricating a positive electrode active material using the same.

### Method of Refining Metal

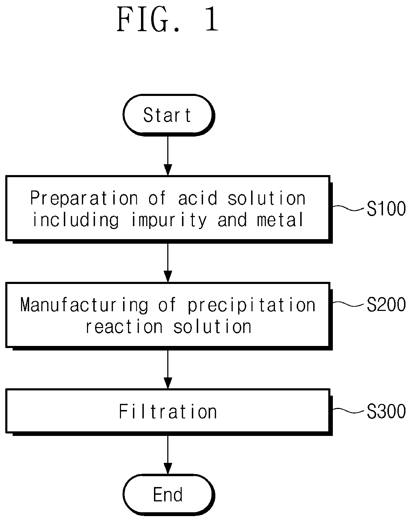

FIG. 1 illustrates a flow chart showing a method of refining metal according to an embodiment of the present disclosure. With reference to FIG. 1, the following will describe in detail a method of refining metal according to an embodiment of the present disclosure.

Referring to FIG. 1, a method of refining metal according to an embodiment of the present disclosure includes preparing an acid solution including an impurity and metal (step S100), adding a filtration aid to the acid solution to manufacture a precipitation reaction solution (step S200), and filtering the precipitation reaction solution to separate a liquid including the metal and a solid including the impurity and the filtration aid (step S300). The filtration aid includes silicon dioxide (SiO₂), aluminium oxide (Al₂O₃), calcium hydroxide (Ca(OH)₂), or a mixture thereof.

In the preparation step (S100), an acid solution may be prepared by addition of powder including an impurity and metal to the acid solution.

The impurity may include at least one selected from Al, Fe, and Cu. The impurity may have an average particle diameter (D₅₀) of about 0.1 µm to about 20 µm.

The metal may include at least one selected from Li, Mn, Co, and Ni.

The acid solution may be an aqueous solution including at least one selected from sulfuric acid (H₂SO₄), hydrochloric acid (HCl), nitric acid (HNO₃), and perchloric acid (HClO₄). The acid solution may have a concentration of about 0.1 M to about 10 M and a pH of about 1 to about 5.

The acid solution according to an embodiment may be added with scrap powder including the impurity and the metal. The term "scrap powder" may refer to a powder obtained through an ordinary method of treating various wastes generated either during the production of rechargeable lithium batteries or from discarded batteries.

A detailed pre-treatment method to produce the powder form may be configured such that solid wastes are cut into appropriate sizes, positive electrode active materials and current collectors are separated through first classification and calcination, and other organic materials and separators are volatilized. Then, the calcined solids may be second classified and selected by specific gravity sorting or magnetic sorting, thereby obtaining a related scrap powder. The obtained scrap powder may inevitably include valuable metals such as Co, Ni, Mn, and Li, as well as impurities such as Al, Fe, Cu, and carbon, but various compositions may be produced depending on the kinds of treated scraps.

In an embodiment, the acid solution including the impurity and the metal may be a lithium sulfate solution, but the present disclosure is not limited thereto.

In the manufacturing step (S200), a precipitation reaction solution is manufactured by adding a filtration aid to the acid solution. In an embodiment, the precipitation reaction solution may be manufactured by adding a neutralizer to the acid solution to prepare a neutralization solution and then adding a filtration aid to the neutralization solution.

The neutralizer may include NaOH, Na₂CO₃, NH₄OH, KOH, or a combination thereof. The neutralization solution may lead to the formation of precipitate by the neutralizer. The neutralizer may be added to the acid solution to prepare the neutralization solution at a pH of about 8 to about 12. The neutralization solution may be prepared by a mixing process performed at about 60 °C to about 90 °C for about 30 minutes to about 3 hours. In an embodiment, the mixing process may include agitation carried out at a rotation speed of about 10 rpm to about 500 rpm.

The precipitation reaction solution may be manufactured by adding a filtration aid to the neutralization solution. Eventually, the precipitation reaction solution to which the filtration aid is added may have a pH of about 8 to about 12.

The filtration aid may have an average particle diameter (D₅₀) of about 1 µm to about 50 µm. In an embodiment, the filtration aid may include silicon dioxide (SiO₂) or aluminium oxide (Al₂O₃). The silicon dioxide (SiO₂) may serve to allow a supernatant (solution) to flow through micropores of particles. The filtration aid may be included in an amount of about 1 to 30 parts by weight relative to 100 parts by weight of the precipitation reaction solution. When the filtration aid has an amount of less than about 1 parts by weight, impurity precipitation may not be easily induced due to an excessively small addition amount of the filtration aid. When the filtration aid has an amount of greater than about 30 parts by weight, an excessive amount of the filtration aid may be added compared to impurities that can be precipitated such that loads may be incurred during the elimination of the filtration aid.

The precipitation reaction solution may be manufactured by a mixing process performed at about 20 °C to about 60 °C for about 20 minutes to about 1 hour. In an embodiment, the mixing process may include agitation carried out at a rotation speed of about 10 rpm to about 500 rpm.

The filtration aid added to the precipitation reaction solution may lead to the precipitation of impurity in the form of hydroxide.

In an embodiment, the precipitation reaction solution may be manufactured by adding a neutralizer to the acid solution. The neutralizer may be used as a filtration aid to produce a byproduct having good filterability. In an embodiment, the neutralizer may be calcium hydroxide (Ca(OH)₂) or calcium carbonate (CaCO₃). The calcium hydroxide (Ca(OH)₂) or calcium carbonate (CaCO₃) may be added to the acid solution to produce gypsum (CaSO₄).

The neutralizer may be added to the acid solution to manufacture the precipitation reaction solution to have a pH of about 8 to about 12. The precipitation reaction solution may be manufactured by a mixing process performed at about 60 °C to about 90 °C for about 30 minutes to about 3 hours. In an embodiment, the mixing process may include agitation carried out at a rotation speed of about 10 rpm to about 500 rpm.

In the separation step S300, the precipitation reaction solution is filtered to separate a liquid including the metal and a solid including the impurity and the filtration aid.

The filtration process may be performed at a reduced pressure, and may use a filter having a cut-off diameter (D₅₀) in a range of about 0.5 µm to about 10 µm. A filter paper may be used as the filter, and there is no limitation as to the filter paper so as long as the filter paper can filter insoluble impurities.

In the filtration process, a target metal may remain in the liquid and the solid including the impurity and the filtration aid may be separated on the filter. The liquid may be recovered to reuse in another filtration process. The filtration process may use any of a filter press, a belt press, a Nutsche filter, and a membrane filter.

According to an embodiment of the present disclosure, the filtration aid may activate the precipitation reaction solution to improve filterability, thereby providing a method of refining metal with an increased filtration rate.

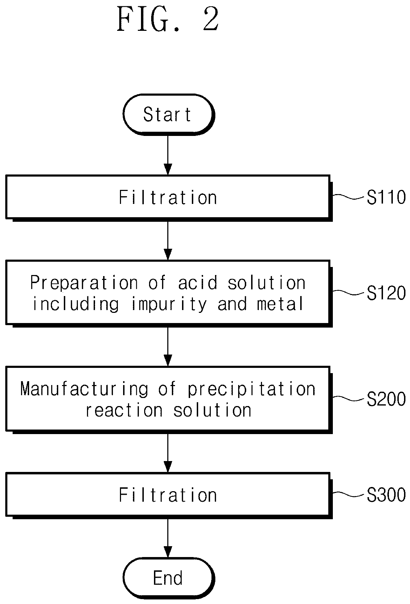

FIG. 2 illustrates a flow chart showing a method of refining metal according to an embodiment of the present disclosure. The following description will focus on a method of refining metal according to an embodiment of the present disclosure.

Referring to FIG. 2, a method of refining metal according to an embodiment of the present disclosure includes coating a filter with a filtration aid by first filtering an aqueous solution including the filtration aid (step S110), preparing an acid solution including an impurity and metal (step S 120), manufacturing a precipitation reaction solution by adding a neutralizer to the acid solution (step S200), and using the filter to perform a second filtration wherein the precipitation reaction solution is separated into a liquid metal and a solid including the impurity (step S300). The filtration aid includes silicon dioxide (SiO₂), aluminium oxide (Al₂O₃), or a mixture thereof.

The coating step S110 may include a first filtration process in which the aqueous solution including the filtration aid is filtered through the filter. The first filtration process may use any of a filter press, a belt press, a Nutsche filter, and a membrane filter.

The first filtration process may be performed at a reduced pressure and may include the use of a filter having a cut-off diameter (D₅₀) in a range of about 0.5 µm to about 10 µm. A filter paper may be used as the filter, and there is no limitation as to the use of filter papers that can filter out insoluble impurities.

The filtration aid may have an average particle diameter (D₅₀) of about 1 µm to about 50 µm. When the filtration aid has an average particle diameter (D₅₀) of less than about 1 µm, the filter coated with the filtration aid may have reduced permeability and an overall process may be delayed. When the filtration aid has an average particle diameter (D₅₀) of greater than about 50 µm, the filter coated with the filtration aid may have reduced filterability and low separation efficiency. The filtration aid may include, for example, silicon dioxide (SiO₂) or aluminium oxide (Al₂O₃).

The aqueous solution may be in the form of suspension in which insoluble filtration aid particles are dispersed. In the aqueous solution, the filtration aid may be included in an amount of about 1 to 30 parts by weight relative to 100 parts by weight of a solvent. For example, the solvent may use water. When the filtration aid has an amount of less than about 1 parts by weight relative to 100 parts by weight of the solvent, filtration, and separation efficiency of a subsequent second filtration process may be reduced due to a small addition amount of the filtration aid. When the filtration aid has an amount of greater than about 30 parts by weight relative to 100 parts by weight of the solvent, the filter coated with the filtration aid may have reduced permeability and a second filtration process may be delayed.

In the preparation step (S120), an acid solution may be prepared by addition of powder including an impurity and metal to the acid solution. The impurity may include at least one of Al, Fe, and Cu. The impurity may have an average particle diameter (D₅₀) of about 0.1 µm to about 20 µm. The metal may include at least one of Li, Mn, Co, and Ni. The acid solution may be an aqueous solution including at least one of sulfuric acid (H₂SO₄), hydrochloric acid (HCl), nitric acid (HNO₃), and perchloric acid (HClO₄). The acid solution may have a concentration of about 0.1 M to about 10 M and a pH of about 1 to about 5.

The scrap powder may be added to the acid solution. The acid solution including the impurity and the metal may be a lithium sulfate solution, but the present disclosure is not limited thereto.

In the manufacturing step (S200), a precipitation reaction solution is manufactured by adding a neutralizer to the acid solution. The neutralizer may include NaOH, Na₂CO₃, NH₄OH, KOH, or a combination thereof. The neutralizer may allow the precipitation reaction solution to produce a precipitate. The neutralizer may be added to the acid solution to manufacture the precipitation reaction solution to have a pH of about 8 to about 12. The precipitation reaction solution may be manufactured by a mixing process performed at about 60 °C to about 90 °C for about 30 minutes to about 3 hours. The mixing process may include agitation carried out at a rotation speed of about 10 rpm to about 500 rpm.

In the separation step S300, a second filtration process is performed in which the precipitation reaction solution is filtered through the filter. The second filtration process may use any of a filter press, a belt press, a Nutsche filter, and a membrane filter.

A method of refining metal according to an embodiment of the present disclosure may use a cylindrical filtration device into which is inserted a filter coated with the filtration aid.

The second filtration process separates a liquid including the metal and a solid including the impurity. That is, in the second filtration process, a target metal may remain in the liquid and the solid including the impurity may be separated through a filter coated with the filtration aid. The liquid may be recovered to reuse in further first and second filtration processes.

According to an embodiment of the present disclosure, the filtration aid coated on the filter may activate a precipitate reactant to improve filterability, thereby providing a method of refining metal having an increased filtration process rate.

### Fabrication of Positive Electrode Active Material

A method of manufacturing a positive electrode active material according to an embodiment of the present disclosure may use the previously described method of refining metal.

A method of manufacturing a positive electrode active material according to an embodiment of the present disclosure may include preparing a mixture of lithium and transition metal by mixing a transition metal precursor with a lithium precursor that is refined by the previously described method of refining metal, and calcinating the mixture of lithium and transition metal. The transition metal precursor may include, but is not limited to, two or more transition metals selected from nickel (Ni), manganese (Mn), and cobalt (Co). The transition metal precursor may be separately prepared by a sol-gel method, a hydrothermal method, a spray pyrolysis method, or a coprecipitation method, and then may be mixed with the lithium precursor and calcined at a high temperature. The mixture of lithium and transition metal is thereby prepared.

The calcination process is not particularly limited and may be achieved by thermal treatment at a temperature range of about 700 °C to about 900 °C for about 3 hours to about 20 hours. When the calcination temperature exceeds about 900°C, uneven particle growth may occur and particle sizes may become excessively large, thereby reducing an amount of particles included per unit area, which may thereby result in a reduction in battery volumetric capacity. In contrast, when the calcination temperature is below about 700 °C, an insufficient reaction may induce residues of raw materials within particles to compromise high-temperature battery safety, and volume density and crystallinity may be decreased such that it is difficult to maintain a stable form. In addition, when the calcination time is less than about 3 hours, it may be difficult to obtain lithium transition metal composite oxide with high crystallinity, and when the calcination time is greater than about 20 hours, particle sizes may become remarkably large and production efficiency may decrease. Thus, a calcination time of about 3 to 20 hours is preferable.

The following description will focus on some embodiments of the present disclosure. The embodiments discussed below are merely to aid in understanding the present disclosure, and the scope of the present disclosure is not limited to the disclosed embodiments.

Metal was refined according to Embodiments and Comparative Examples described below.

### Embodiment 1

A NaOH neutralizer was added to 250 mL of lithium sulfate solution including an impurity and metal and having a pH of 3.1 to prepare a lithium sulfate neutralization solution with a pH adjusted to 10.3. The lithium sulfate neutralization solution was stirred magnetically at 300 rpm for 1 hour at 80 °C.

20 grams of diatomite (SiO₂, a filtration aid) was added to 1 L of the lithium sulfate neutralization solution to manufacture a precipitate reaction solution. The precipitation reaction solution was stirred magnetically at 300 rpm for 30 minutes at room temperature (25 °C).

The precipitation reaction solution was subject to vacuum filtration using a 1 µm filter paper. The filtration separated a liquid including lithium and a solid including the filtration aid.

### Embodiment 2

Ca(OH)₂ was added to 250 mL of lithium sulfate solution including an impurity and metal and having a pH of 3.1 to prepare a lithium sulfate neutralization solution with a pH adjusted to 9.5. The lithium sulfate neutralization solution was stirred magnetically at 300 rpm for 1 hour at 80 °C.

Ca(OH)₂ was used as a neutralizer such that the lithium sulfate neutralization solution was induced to produce gypsum (CaSO₄). In Embodiment 2, the neutralizer was utilized as a filtration aid to manufacture a precipitation reaction solution in which gypsum (CaSO₄) was produced.

The precipitation reaction solution was subject to vacuum filtration using a filter paper of 1 µm.

### Embodiment 3

A first filtration process was performed in which a 1000 mL experimental cylindrical filter press equipped with a filter was used such that a diatomite dilute solution (filtration aid) was filtered to coat the filter with a diatomite component. The diatomite dilute solution was prepared by adding 20 grams of diatomite to 1 L distilled water.

A second filtration process was performed in which the precipitation reaction solution prepared in Embodiment 1 was filtered a second time on the filter through which the diatomite dilute solution was filtered, thereby separating a liquid including lithium and a solid including an impurity. In the filtration process, the filtration pressure was 5 kgf/cm² and the permeability of the filter was 5s/100cc.

### Comparative Example 1

Metal was refined by the same method as that of Embodiment 1, except that no diatomite was added.

### Comparative Example 2

Metal was refined by the same method as that of Embodiment 3, except that the first filtration process was not performed.

### Evaluation Example 1: SEM Analysis

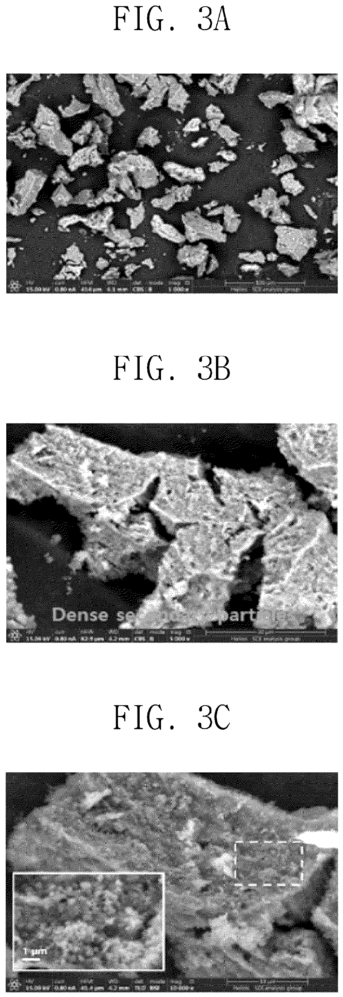

A scanning transmission electron microscope (SEM) was used to analyze a precipitate produced by the neutralization process in Comparative Example 1. FIGS. 3A to 3C show the SEM results of precipitates produced by a neutralization process in Comparative Example 1.

Referring to FIGS. 3A to 3C, it can be seen that there is a large amount of micro-sized small particles. It may thereby be ascertained that a solid produced by the neutralization process includes an impurity precipitate.

### Evaluation Example 2-1: Filterability (Kind of Filtration Aid)

To confirm the improvement of filtration efficiency according to the addition of a filtration aid, filtration rates of methods according to Embodiments 1 and 2 and Comparative Example 1 were measured, and the measured results are shown in Table 1 below.

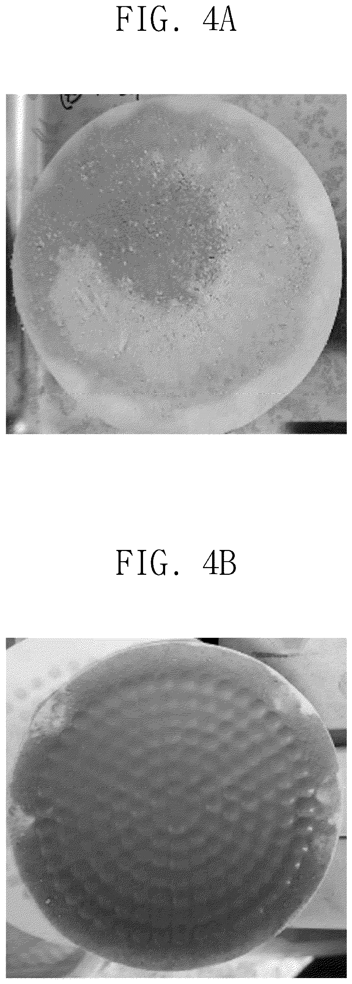

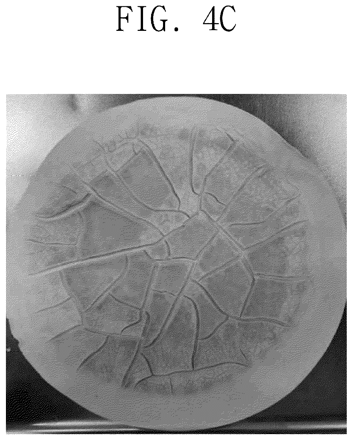

In addition, a weight of a solid separated through the filtration process was measured, and the measured results are shown in Table 1 below. FIGS. 4A and 4B show an appearance of the solid separated through the filtration process. FIG. 4A shows an appearance of the solid separated through the filtration process according to Comparative Example 1. FIG. 4B shows an appearance of the solid separated through the filtration process according to Embodiment 1. FIG. 4C shows an appearance of the solid separated through the filtration process according to Embodiment 2.

**[Table 1]**

| | Filtration rate (mL/min) | Solid weight (g) |
|---|---|---|
| Comparative Example 1 | 3.5 | 2.8 |
| Embodiment 1 | 62.5 | 6.8 |
| Embodiment 2 | 41.7 | 8.7 |

Referring to Table 1, it can be seen that filterability was much better with the methods of refining metal according to Embodiments 1 and 2 of the present disclosure than with the method of refining metal according to Comparative Example 1. In addition, a weight of the impurity was greater with the methods of refining metal according to Embodiments 1 and 2 than with the method of refining metal according to Comparative Example 1. Thus, it can be understood that there was an improvement in filtration rate and impurity removal with the methods of refining metal according to Embodiments 1 and 2 where NaOH was used as a neutralizer and then diatomite was used as a filtration aid or a neutralizer was used as a filtration aid to produce gypsum (CaSO₄) (providing good filterability) as compared to the method of refining metal according to Comparative Example 1.

### Evaluation Example 2-2: Filterability (Use of Cylindrical Filtration Device)

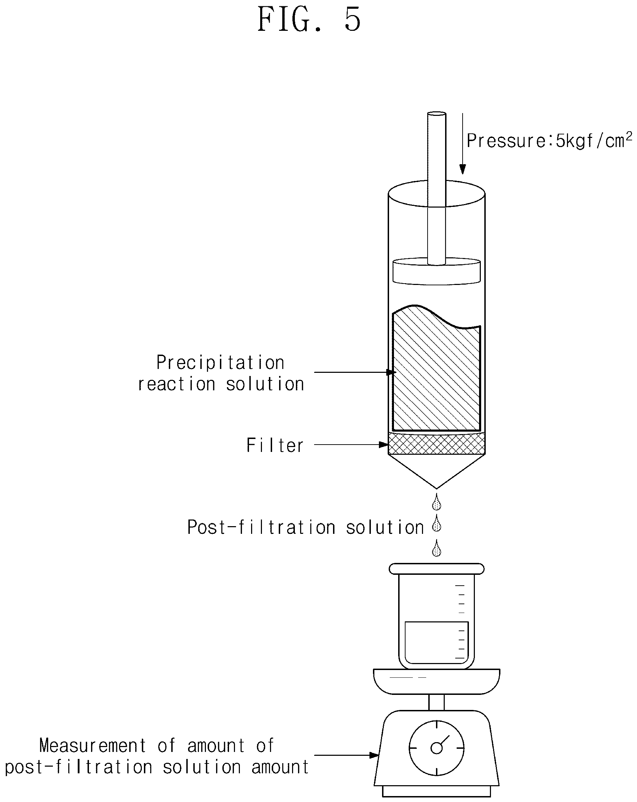

To ascertain an effect of filterability according to the presence of filtration aid coating on a filter inserted into a cylindrical filtration device, a cylindrical filtration device was equipped with a filter depicted in FIG. 5. FIG. 5 is a schematic diagram showing a cylindrical filtration device used in the Embodiments and the Comparative Example.

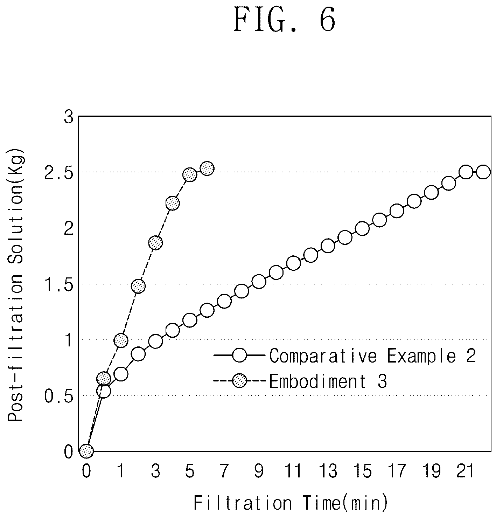

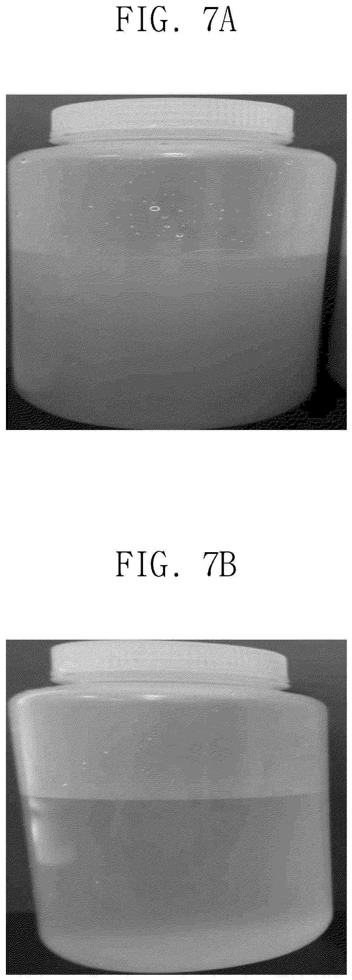

Filtration rates of methods according to Embodiment 3 and Comparative Example 2 were measured, and the measured results are shown in Table 2 below and FIG. 6. In addition, a weight of solid in liquid separated through the filtration process and a water content of cake were measured, and the measured results are shown in Table 2 below. Further, an appearance of the liquid separated through the filtration process is shown in FIGS. 7A and 7B. Specifically, FIG. 7A shows an appearance of the liquid separated through the filtration process according to Comparative Example 2. FIG. 7B shows an appearance of the liquid separated through the filtration process according to Embodiment 3.

**[Table 2]**

| | Comparative Example 2 | Embodiment 3 |
|---|---|---|
| Filtration rate (g/min) | 113 | 421 |
| Solid in post-filtration liquid (g/L) | 0.7 | 0.2 |
| Cake water content (%) | 39.4 | 32.3 |

Referring to Table 2 and FIGS. 6 and 7, it can be seen that filterability was better in the method of refining metal according to Embodiment 3 of the present disclosure than in the method of refining metal according to Comparative Example 2. In addition, a weight of solid (impurity) in liquid after filtration was lower in the method of refining metal according to Embodiment 3 than in the method of refining metal according to Comparative Example 2. Thus, it can be understood that there was an improvement in filtration rate and impurity removal in the method of refining metal according to Embodiment 3 in which a filter coated with the filtration aid is inserted into a cylindrical filtration device than in the method of refining metal according to Comparative Example 2.

There are increased filtration rates in the methods of refining metal according to the present disclosure. Accordingly, high-purity metal may be quickly recovered.

Although some embodiments of inventive concepts have been discussed with reference to accompanying figures, it will be understood that various changes in form and details may be made therein without departing from the scope of inventive concepts. It therefore will be understood that the embodiments described above are only illustrative but not limitative in all aspects.

Embodiments are set out in the following clauses:
Clause 1. A method of refining metal, the method comprising:
   preparing an acid solution that includes an impurity and metal;
   adding a filtration aid to the acid solution to manufacture a precipitation reaction solution; and
   filtering the precipitation reaction solution to separate a liquid including the metal and a solid including the impurity and the filtration aid,
   wherein the filtration aid includes silicon dioxide (SiO₂), aluminum oxide (Al₂O₃), calcium hydroxide (Ca(OH)₂), or a mixture thereof.
Clause 2. The method of clause 1, wherein the acid solution includes a lithium sulfate solution.
Clause 3. The method of clause 1 or clause 2, wherein manufacturing the precipitation reaction solution includes:
   adding a neutralizer to the acid solution to prepare a neutralization solution; and
   adding the filtration aid to the neutralization solution to manufacture the precipitation reaction solution,
   wherein preparing the neutralization solution is performed at about 60°C to about 90°C for about 30 minutes to about 3 hours,
   wherein the neutralizer includes NaOH, Na₂CO₃, NH₄OH, KOH, or a combination thereof.
Clause 4. The method of any one of clauses 1 to 3, wherein the acid solution has a pH of about 1 to about 5, and the precipitation reaction solution has a pH of about 8 to about 12.
Clause 5. The method of any one of clauses 1 to 4**,** wherein manufacturing the precipitation reaction solution is performed at about 20°C to about 60°C for about 20 minutes to about 1 hour.
Clause 6. The method of any one of clauses 1 to 5, wherein, in manufacturing the precipitation reaction solution includes, the filtration aid is added in an amount of about 1 to 30 parts by weight relative to 100 parts by weight of the precipitation reaction solution.
Clause 7. The method of any one of clauses 1 to 6, wherein the impurity has an average particle diameter (D₅₀) of about 0.1 µm to about 20 µm, and the filtration aid has an average particle diameter (D₅₀) of about 1 µm to about 50 µm.
Clause 8. The method of any one of clauses 1 to 7, wherein, in manufacturing the precipitation reaction solution, the acid solution is added with calcium hydroxide (Ca(OH)₂) or calcium carbonate (CaCO₃) to produce gypsum (CaSO₄).
Clause 9. The method of any one of clauses 1 to 8, wherein filtering the precipitation reaction solution includes using a filter whose cut-off diameter (D₅₀) is in a range of about 0.5 µm to about 10 µm.
Clause 10. The method of any one of clauses 1 to 9, wherein the liquid is recovered to reuse in filtering the precipitation reaction solution.
Clause 11. A method of refining metal, the method comprising:
   first filtering an aqueous solution including a filtration aid to coat the filter with the filtration aid;
   preparing an acid solution that includes an impurity and metal;
   adding a neutralizer to the acid solution to manufacture a precipitation reaction solution; and
   second filtering the precipitation reaction solution through the filter to separate a liquid including the metal and a solid including the impurity,
   wherein the filtration aid includes silicon dioxide (SiO₂), aluminum oxide (Al₂O₃), or a mixture thereof.
Clause 12. The method of clause 11, wherein, in the aqueous solution, the filtration aid is included in an amount of about 1 to 30 parts by weight relative to 100 parts by weight of a solvent.
Clause 13. The method of clause 11 or clause 12, wherein the acid solution includes a lithium sulfate solution.
Clause 14. The method of any one of clauses 11 to 13, wherein the neutralizer includes one of NaOH, Na₂CO₃, NH₄OH, KOH, and a combination thereof.
Clause 15. The method of any one of clauses 11 to 14**,** wherein the acid solution has a pH of about 1 to about 5, and the precipitation reaction solution has a pH of about 8 to about 12.
Clause 16. The method of any one of clauses 11 to 15, wherein manufacturing the precipitation reaction solution is performed at about 60 °C to about 90 °C for about 30 minutes to about 3 hours.
Clause 17. The method of any one of clauses 11 to 16, wherein the impurity has an average particle diameter (D₅₀) of about 0.1 µm to about 20 µm, and the filtration aid has an average particle diameter (D₅₀) of about 1 µm to about 50 µm.
Clause 18. The method of any one of clauses 11 to 17, wherein the filter has a cut-off diameter of about 0.5 µm to about 10 µm.
Clause 19. The method of any one of clauses 11 to 18, wherein the liquid is recovered reuse in first filtering the aqueous solution and second filtering the precipitation reaction solution.
20. A method of manufacturing a positive electrode active material, the method comprising:
   manufacturing a mixture of lithium and transition metal by mixing a transition metal precursor with a lithium precursor that is refined by the method of any one of clauses 1 to 19; and
   calcinating the mixture of lithium and transition metal.

## Claims

1. A method of refining metal, the method comprising:
preparing an acid solution that includes a metal and an impurity;
adding a filtration aid to the acid solution to make a precipitation reaction solution; and
filtering the precipitation reaction solution to separate a liquid that includes the metal and a solid that includes the impurity and the filtration aid,
wherein the filtration aid includes one or more of silicon dioxide (SiO₂), aluminium oxide (Al₂O₃), and calcium hydroxide (Ca(OH)₂).

2. The method of claim 1, wherein the acid solution includes a lithium sulfate solution.

3. The method of claim 1 or claim 2, wherein making the precipitation reaction solution includes:
adding a neutralizer to the acid solution to prepare a neutralization solution; and
adding the filtration aid to the neutralization solution to make the precipitation reaction solution,
wherein neutralization solution is prepared at about 60 °C to about 90 °C for about 30 minutes to about 3 hours, and
wherein the neutralizer includes one or more of NaOH, Na₂CO₃, NH₄OH, and KOH.

4. The method of any one of claims 1 to 3, wherein the acid solution has a pH of about 1 to about 5, and the precipitation reaction solution has a pH of about 8 to about 12.

5. The method of any one of claims 1 to 4, wherein the precipitation reaction solution is made at about 20 °C to about 60 °C for about 20 minutes to about 1 hour.

6. The method of any one of claims 1 to 5, wherein the filtration aid is added in an amount of about 1 to 30 parts by weight relative to 100 parts by weight of the precipitation reaction solution.

7. The method of any one of claims 1 to 6, wherein the impurity has an average particle diameter (D₅₀) of about 0.1 µm to about 20 µm, and the filtration aid has an average particle diameter (D₅₀) of about 1 µm to about 50 µm.

8. The method of any one of claims 1 to 7, wherein calcium hydroxide (Ca(OH)₂) or calcium carbonate (CaCO₃) is added to the acid solution to thereby produce gypsum (CaSO₄).

9. The method of any one of claims 1 to 8, wherein filtering the precipitation reaction solution includes using a filter having a cut-off diameter (D₅₀) in a range of about 0.5 µm to about 10 µm.

10. The method of any one of claims 1 to 9, wherein the liquid is reused in a second filtering of the precipitation reaction solution.

11. A method of refining metal, the method comprising:
preparing a filter using an aqueous solution that includes a filtration aid such that the filter is coated with the filtration aid;
preparing an acid solution that includes a metal and an impurity;
adding a neutralizer to the acid solution to make a precipitation reaction solution; and
filtering the precipitation reaction solution with the filter to separate a liquid including the metal and a solid including the impurity,
wherein the filtration aid includes one or more of silicon dioxide (SiO₂), aluminium oxide (Al₂O₃).

12. The method of claim 11, wherein the filtration aid is included in the aqueous solution in an amount of about 1 to 30 parts by weight relative to 100 parts by weight of a solvent.

13. The method of claim 11 or claim 12, wherein the acid solution includes a lithium sulfate solution.

14. The method of any one of claims 11 to 13, wherein the neutralizer includes one or more of NaOH, Na₂CO₃, NH₄OH, and KOH.

15. The method of any one of claims 11 to 14, wherein the acid solution has a pH of about 1 to about 5, and the precipitation reaction solution has a pH of about 8 to about 12.
